Europäisches Patentamt

European Patent Office

Office européen des brevets

(19)

(11) Veröffentlichungsnummer: **0 014 383 B1**

(12) **EUROPÄISCHE PATENTSCHRIFT**

(45) Veröffentlichungstag der Patentschrift:
04.11.81

(51) Int. Cl.³: **A 01 D 53/06,** A 01 D 75/20

(21) Anmeldenummer: **80100344.3**

(22) Anmeldetag: **23.01.80**

(54) Auslenkbare Sicherheitsschliesseinrichtung mit mehreren Klappteilen für Rasenmäher.

(30) Priorität: **31.01.79 FR 7903671**

(43) Veröffentlichungstag der Anmeldung:
**20.08.80 Patentblatt 80/17**

(45) Bekanntmachung des Hinweises auf die Patenterteilung:
**04.11.81 Patentblatt 81/44**

(84) Benannte Vertragsstaaten:
**AT BE CH DE NL**

(56) Entgegenhaltungen:
**FR-A-2 157 403**
**US-A-3 893 284**
**US-A-3 928 956**

(73) Patentinhaber: **Outils Wolf, Société à responsabilité limitée, Rue de l'Industrie, F-67160 Wissembourg (FR)**

(72) Erfinder: **Der Erfinder hat auf seine Nennung verzichtet**

(74) Vertreter: **Nuss, Pierre, 10, rue Jacques Kablé, F-67000 Strasbourg (FR)**

## Auslenkbare Sicherheitsschließeinrichtung mit mehreren Klappteilen für Rasenmäher

Die vorliegende Erfindung bezieht sich auf die Herstellung von Rasenmähern und hat eine auslenkbare Sicherheitsschließeinrichtung mit mehreren Klappteilen für Rasenmäher zum Gegenstand (US-A-3 893 284).

Derzeit bestehen die Sicherheitseinrichtungen zum Abschließen des Auswurfkanals eines Sichelrasenmähers aus einem oder mehreren Klappteilen, die durch eine entsprechende Steuerung betätigt werden.

Diese bekannten Schließeinrichtungen besitzen jedoch gewisse Nachteile, die eine Rolle spielen, wenn der Sammelbehälter des Rasenmähers ein- oder ausgehakt wird. Dabei sind sie meist von sperriger Konstruktion, so daß bei der innerhalb des Auswurfkanals oder innerhalb des Sammelbehälters stattfindender Schwenkbewegung sie eine größere Menge geschnittenes Gras zurückhalten, wenn der Sammelbehälter entleert wird. Bei außerhalb des Auswurfkanals stattfindender Schwenkbewegung ist es nicht möglich, einen vollkommenen Schutz des Benutzers bei der Entfernung des Sammelbehälters zu gewährleisten, in Anbetracht dessen, daß zeitweise Öffnungen vorliegen.

Der vorliegenden Erfindung liegt die Aufgabe zugrunde, diese Nachteile zu beseitigen.

Sie hat nämlich eine Sicherheitseinrichtung mit mehreren Klappteilen für Rasenmäher zum Gegenstand, die dadurch gekennzeichnet ist, daß sie im wesentlichen aus mehreren miteinander schwenkbar verbundenen festen Elementen besteht, die in der Richtung der Betätigung der Einrichtung linear geführt werden und die unter der Wirkung eines unter Vorspannung stehenden elastischen in der Richtung des automatischen Schließens wirksamen Elementes liegen.

Nachstehend ist ein Ausführungsbeispiel der Erfindung anhand der schematischen Zeichnungen näher erläutert.

Es zeigt

Fig. 1 perspektivisch ein mit der erfindungsgemäßen Verschließeinrichtung ausgestattetes Rasenmähergehäuse;

Fig. 2 in einem größeren Maßstab, eine Seitenansicht und eine Schnittansicht der teilweise geöffneten Schließeinrichtung gemäß Fig. 1 und

Fig. 3 eine Ansicht von vorne der Schließeinrichtung gemäß Fig. 2.

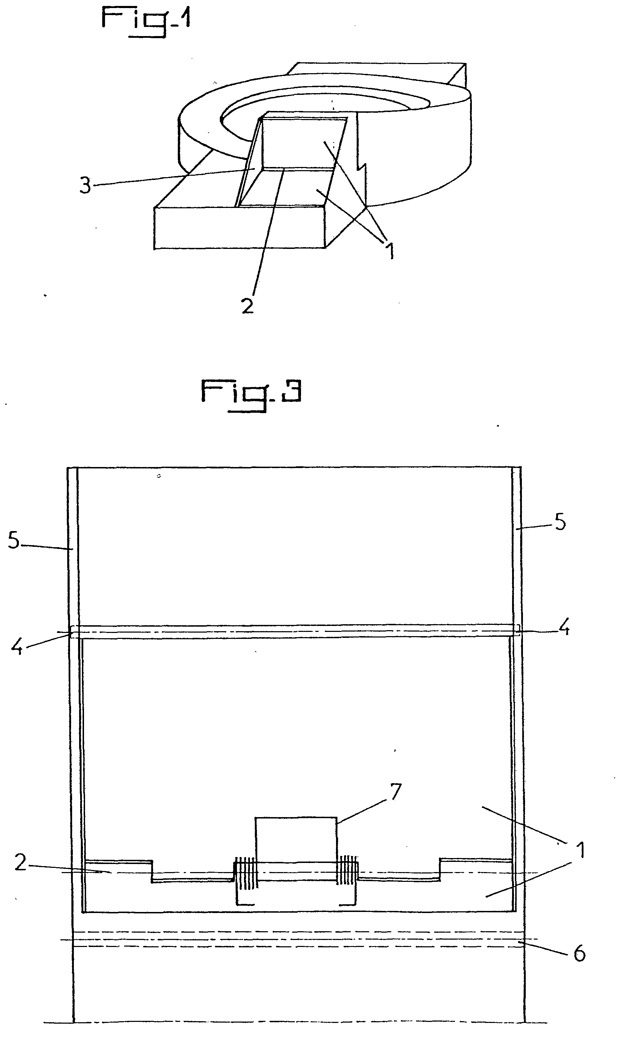

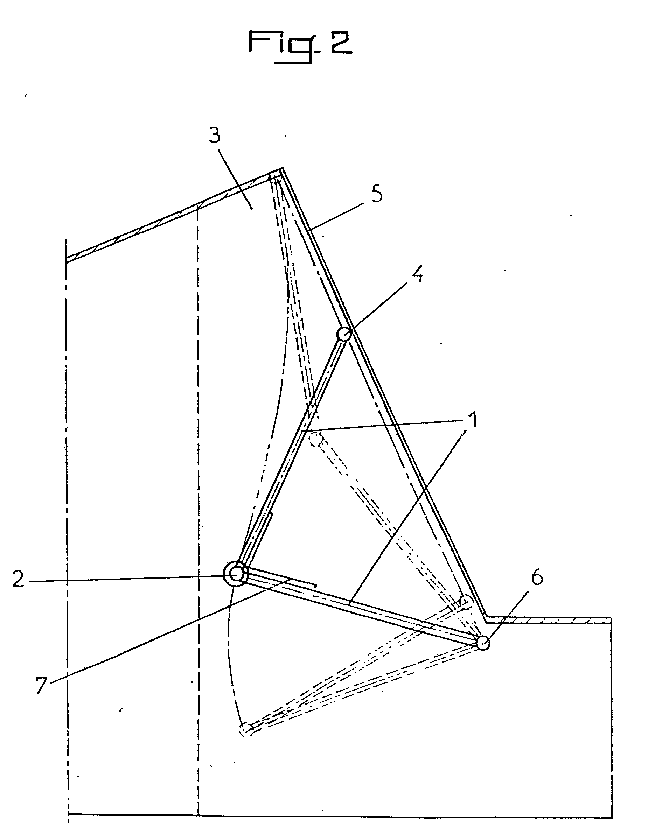

Gemäß dem insbesondere in der Fig. 1 der beiliegenden Zeichnungen dargestellten Erfindungsgegenstand besteht die auslenkbare Sicherheitsschließeinrichtung im wesentlichen aus einer aus festen, bzw. steifen Elementen wie z. B. zwei Klappteilen 1 bestehenden Anordnung. Diese Klappteile 1 sind bei 2 schwenkbar miteinander verbunden. Sie werden zweckmäßig im wesentlichen parallel zur Bewegungsbahn des Sammelbehälters in den Seitenwandungen 3 des Auswurfkanals linear geführt. Diese lineare Führung wird durch zwei Rollen bzw. Drehzapfen 4 des oberen Klappteils bewirkt, die sich hinter den Randteilen 5 der Wandungen 3 bewegen können (siehe Fig. 2 und 3).

Der untere Klappteil 1 ist innerhalb des Gehäuses des Rasenmähers bei 6 schwenkbar angebracht. An der Verbindung 2 zwischen den Klappteilen 1 kommt ein elastisches, unter Vorspannung stehendes Element zur Wirkung, das als doppelendige Schraubenfeder 7 ausgebildet sein kann, die so auf die Klappteile 1 zur Wirkung kommt, daß sie einer automatischen Schließkraft unterliegen.

Die Wirkungsweise des Erfindungsgegenstandes ist die folgende:

Beim Aufsetzen des Sammelbehälters am Auswurfkanal wird das Mundstück des Sammelbehälters unter die Kanten 5 der Wandungen 3 geführt, so daß der obere Klappteil 1 dadurch verschoben wird und auf den unteren Klappteil 1 gegen die Wirkung der Feder 7 geschwenkt wird. Das in Fig. 2 durch gebrochene Striche dargestellte Zusammenklappen der Klappteile 1 erfolgt deshalb allmählich beim Aufsetzen des Sammelbehälters, so daß es zu keiner Zeit zu einer für den Benutzer gefährlichen Aufdeckung einer Öffnung kommt. Beim Abnehmen des Sammelbehälters folgt der obere Klappteil unter der Wirkung der Feder 7 der Bewegung des Sammelbehälters, so daß sich der Auswurfkanal vollständig abschließt.

Die vorliegende Erfindung erlaubt es, eine platzsparende, sehr einfach zu betätigende Sicherheitsverschließeinrichtung herzustellen. Im übrigen in Anbetracht der im wesentlichen parallel zur Bewegungsbahn des Sammelbehälters erfolgenden Führung des oberen Klappteils erübrigt sich eine mit dem Klappteil verbundene Steuerung.

**Patentansprüche**

1. Auslenkbare Sicherheitsschließeinrichtung mit mehreren Klappteilen (1) für Rasenmäher, dadurch gekennzeichnet, daß die Klappteile miteinander schwenkbar verbunden sind, in der Richtung der Betätigung der Einrichtung linear geführt sind und der Wirkung eines unter Vorspannung stehenden elastischen in der Richtung des automatischen Schließens wirksamen Elementes (7) unterliegen.

2. Auslenkbare Sicherheitsschließeinrichtung nach Anspruch 1, dadurch gekennzeichnet, daß das mittels eines Sammelbehälters für Gras betätigte obere Klappteil durch an den Kanten (5) eines Auswurfkanals liegende Drehzapfen (4) oder dergleichen geführt ist und das elastische Glied aus einer doppelendigen Schraubenfeder (7) besteht.

## Claims

1. Deflectable safety closing mechanism with a plurality of flaps (1) for lawnmowers, characterized in that the flaps are pivotably interconnected, are guided in linear manner in the mechanism operating direction and are subject to the action of a biased elastic member (7) acting in the automatic closing direction.

2. Deflectable safety closing mechanism according to claim 1, characterized in that the guided by a pivot (4) or the like located on the edges (5) of a discharge chute and the elastic member comprises a double-ended helical spring (7).

## Revendications

1. Trappe de sécurité escamotable à volets multiples (1) pour tondeuse à gazon, caractérisée en ce que les volets multiples sont reliés entre eux de manière articulée, sont guidés linéairement dans le sens de la manoeuvre de la trappe, et sont soumis à l'action d'un organe (7) élastique précontraint agissant dans le sens de la fermeture automatique.

2. Trappe de sécurité escamotable, suivant la revendication 1, caractérisée en ce que le volet supérieur, actionné par un réceptacle de ramassage de l'herbe, est guidé par des tourillons (4) ou analogues prenant appui contre les rebords (5) d'un canal d'éjection, et en ce que l'organe élastique est constitué par un double ressort de flexion enroulé.

Fig.1

3

2

1

Fig.3

5

5

5

4

4

7

2

1

2

1

6

# Fig. 2